# FASCICULE DE BREVET EUROPEEN

(11) **EP 1 533 187 B1**
(45) Date de publication et mention de la délivrance du brevet: **06.08.2008**
(21) Numéro de dépôt: 04300779.8
(22) Date de dépôt: 10.11.2004
(51) Int. Cl.: B60R 9/05

(54) **Barre de toit à faible lâcher tourbillonnaire**
Dachträgerholm mit reduziertem Wirbel
Roof rack bar with reduced vortex

(30) Priorité: 21.11.2003 FR 0313682
(43) Date de publication de la demande: 25.05.2005
(73) Titulaire: Renault, 92109 Boulogne Billancourt (FR)
(72) Inventeur: Arguillat, Blandine, 75015, Paris (FR); Vaillant, Olivier, 91370, Verrières le Buisson (FR)

(56) Documents cités:
- WO-A-99/54168
- DE-A- 4 035 729
- DE-A- 10 012 905

## Description

La présente invention se rapporte à une barre de toit pour véhicule automobile destinée à supporter des objets et en particulier des bagages.

On connaît des systèmes de barres de toit qui se montent transversalement au-dessus du toit des véhicules automobiles grâce à des moyens de fixation latéraux adaptés à venir s'accrocher au bord dudit toit ou à des barres longitudinales latérales, Lorsque le véhicule est en mouvement, l'air interagit avec les barres de toit qui sont étendues transversalement, à distance du toit, de telle sorte qu'il s'écoule le long de la paroi de la barre, de l'amont vers l'aval, la pression d'air amont devenant supérieure à la pression d'air aval,

Il se produit alors un phénomène dit de lâcher tourbillonnaire, dans lequel des turbulences apparaissent à l'arrière de la barre de toit à des fréquences déterminées dans le spectre audible, Le bruit ainsi émis présente une puissance suffisante pour gêner les passagers du véhicule,

Pour y remédier, il a été imaginé de remplacer les barres de toit, qui étaient initialement de section sensiblement rectangulaire par des barres profilées de type ailes d'avion, ce qui permettait en plus de réduire la traînée aérodynamique et par conséquent diminuait les contraintes de frottement dans l'air.

Cependant, ces barres de toit, telles que décrites dans le document WO 99/54168, qui correspond au préambule de la revendication 1, ne conviennent que pour une vitesse déterminée d'avancement du véhicule ce qui limite considérablement leur utilisation.

Dans le même but de diminuer la puissance du bruit émis par la barre de toit, il a été imaginé de concevoir une barre comportant une tige centrale recouverte d'une enveloppe, l'air étant susceptible de s'écouler autour et à travers ladite enveloppe par des orifices, à partir de la partie amont de ladite barre dans une direction opposée à ladite direction d'avancement de façon à perturber les turbulences. On pourra se référer au document DE 4035729 qui décrit une telle barre de toit.

Bien que le bruit ainsi émis en tant que tel par la barre de toit soit moindre, lorsque le véhicule circule avec un bagage en appui sur la barre, des bruits supplémentaires apparaissent.

Un objet de la présente invention est alors de fournir une barre de toit qui permet non seulement d'atténuer la puissance sonore lorsqu'elle est entraînée en mouvement avec le véhicule automobile sur lequel elle est montée, mais aussi qui ne génère pas d'autre bruit supplémentaire lorsqu'un chargement ou bagage est en appui dessus.

A cet effet la présente invention propose une barre de toit pour véhicule automobile adaptée à supporter un bagage et à être montée en travers par rapport à la direction d'avancement dudit véhicule, ladite barre comportant une tige centrale recouverte d'une enveloppe, l'air étant susceptible de s'écouler autour et à travers ladite enveloppe, à partir de la partie amont de ladite barre dans une direction opposée à ladite direction d'avancement ; ladite enveloppe comprenant deux demi-coques longitudinales montées de part et d'autre de ladite tige et qui présentent chacune un bord longitudinal amont correspondant à ladite partie amont, lesdites demi-coques étant mobiles en translation l'une par rapport à l'autre, entre une position fermée dans laquelle les deux bords amont sont joints et une position ouverte dans laquelle les deux bords amont sont écartés l'un de l'autre pour permettre le passage de l'air entre les deux ; les deux demi-coques étant adaptées à être maintenues dans ladite position fermée lorsque ladite barre reçoit ledit bagage et à être maintenues dans ladite position ouverte lorsque ladite barre est libre.

Ainsi, une caractéristique de l'invention réside dans le mode de conception de l'enveloppe de ladite barre en deux demi-coques qui, d'une part permettent le passage en amont de l'air entre elles lorsque la barre est libre de tout bagage, de sorte que la différence de pression entre l'amont et l'aval de la barre de toit est fortement réduite et par là-même la puissance sonore liée aux turbulences et d'autre part, obligent l'air à s'écouler autour de ladite enveloppe et plus particulièrement dessous, entre la barre et le toit lorsqu'elle supporte un bagage, ce qui ne génère aucun bruit supplémentaire.

La réduction de puissance sonore résulte de la diminution des efforts de cisaillement entre l'air qui s'écoule autour de la barre de toit à une vitesse sensiblement égale à la vitesse du véhicule et l'air situé en aval de la barre de toit qui grâce à l'invention présente une vitesse non nulle de l'ordre de la vitesse du véhicule.

En outre, le bruit lié au lâcher tourbillonnaire est plus atténué encore par rapport à la barre de toit selon l'art antérieur qui présente des orifices puisque les bords longitudinaux amont des demi-coques qui forment des lèvres, constituent une seule ouverture longitudinale lorsqu'ils sont écartés l'un de l'autre.

Selon un mode particulièrement avantageux de mise en oeuvre de l'invention la barre de toit comprend des moyens élastiquement déformables adaptés à maintenir lesdites deux demi-coques dans ladite position ouverte. Lorsqu'un objet pesant, tel un bagage est installé en appui sur la demi-coque supérieure elle est entraînée sensiblement verticalement vers la demi-coque inférieure dans ladite position fermée en contraignant les moyens élastiquement déformables. Dès que la barre de toit est libérée de l'objet pesant, les demi-coques sont entraînées dans la position ouverte par les moyens élastiquement déformables.

En outre, la barre de toit présente une partie aval opposée à ladite partie amont et lesdites deux demi-coques présentent des bords longitudinaux aval correspondant à ladite partie aval, et de façon particulièrement avantageuse, lesdits bords longitudinaux aval sont maintenus écartés l'un de l'autre dans ladite position ouverte, pour former des chemins de passage de l'air entre lesdites deux demi-coques longitudinales, de la partie amont vers la partie aval, De la sorte, l'air qui s'engouffre entre les bords longitudinaux amont, s'écoule entre la tige centrale et les deux demi-coques et s'échappent entre les deux bords longitudinaux avals.

Ainsi, la différence de pression entre la partie amont et la partie aval de la barre de toit est voisine de zéro et le phénomène de fâcher tourbillonnaire n'apparaît plus.

Selon un mode particulier de mise en oeuvre de l'invention particulièrement avantageux, lesdits bords longitudinaux aval sont susceptibles d'être joints dans ladite position fermée, ce qui réduit la traînée aérodynamique.

Selon un autre mode particulier de mise en oeuvre, ladite tige centrale présente une portion aval correspondant à ladite partie aval de ladite barre, lesdits bords longitudinaux aval étant susceptibles de prendre appui contre la portion aval de ladite tige centrale dans ladite position fermée, ce qui permet également de réduire la traînée aérodynamique.

Préférentiellement, lesdites deux demi-coques sont montées mobiles sur ladite tige centrale de telle sorte qu'elles sont adaptées à s'écarter de la tige centrale pour former deux chemins de passage permettant le passage de l'air,

Selon un premier mode de réalisation particulièrement avantageux, lesdites deux demi-coques sont reliées à ladite tige centrale par des moyens formant parallélogramme déformable qui présentent quatre axes parallèles formant pivots, ladite tige centrale étant étendue à l'intérieur desdits moyens dont deux premiers axes diagonalement opposés sensiblement parallèles à ladite tige centrale sont montés glissants dans un plan sensiblement horizontal coupant ladite tige centrale et dont deux seconds axes diagonalement opposés sont solidaires respectivement des deux demi-coques ; et l'entraînement d'une demi-coque par rapport à ladite tige centrale- provoquant la déformation desdits moyens et le déplacement de l'autre demi-coque dans une direction opposée. Comme on l'expliquera plus en détail dans la suite de la description, les moyens formant parallélogramme déformable permettent non seulement de maintenir les deux demi-coques l'une par rapport à l'autre et par rapport à la tige centrale, mais aussi de les maintenir parallèles entre elles lorsqu'elles sont entraînées en translation l'une vers l'autre.

Selon un second mode de réalisation avantageux l'une desdites deux demi-coques est montée longitudinalement à pivotement sur ladite tige centrale, de façon que l'appui du bord amont de l'autre demi-coque sur son bord amont entraîne son bord aval vers le bord aval de l'autre demi-coque. De la sorte, grâce à un mode d'assemblage simplifié de la demi-coque inférieure de préférence, dans la position de fermeture les bords longitudinaux amont et les bords longitudinaux aval interdisent le passage de l'air à travers les deux demi-coques et permettent de réduire la traînée aérodynamique,

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique en perspective d'un véhicule automobile sur lequel sont montées des barres de toit conformes à l'invention ;
- la Figure 2 est une vue schématique en coupe droite d'une barre de toit illustrée sur la Figure 1 surmontée d'un objet pesant ;
- la Figure 3 est une vue schématique de la barre de toit illustrée sur la Figure 2, libérée dudit objet pesant ;
- les Figures 4a et 4b sont des vues schématiques en coupe droite d'une barre de toit conforme à l'invention selon une première variante de réalisation et dans deux positions distinctes ;
- les Figures 5a et 5b sont des vues schématiques en coupe droite d'une barre de toit conforme à l'invention selon une deuxième variante de réalisation et dans deux positions distinctes ;
- les Figures 6a et 6b sont des vues schématiques en coupe droite d'une barre de toit conforme à l'invention selon une troisième variante de réalisation et dans deux posions distinctes ; et,
- la Figure 7 est une vue schématique de détail d'un élément de la barre de toit illustrée sur les Figures 6a et 6b.

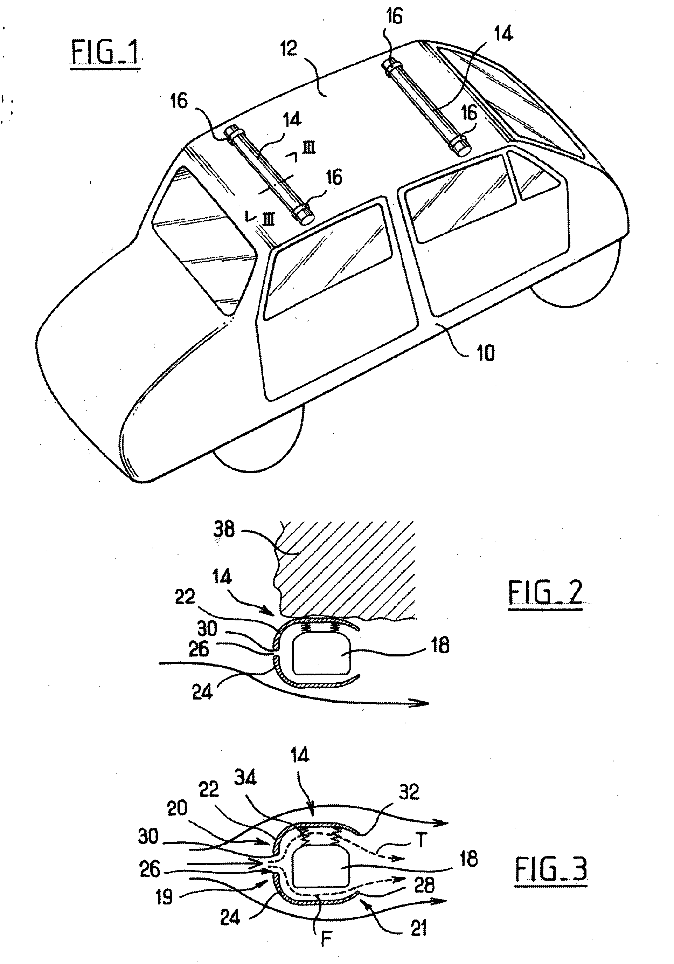

La Figure 1 illustre schématiquement un véhicule automobile 10 sur le toit 12 duquel, deux barres de toit 14 identiques ont été installées transversalement par rapport au véhicule 10, l'une vers l'arrière l'autre vers l'avant. Ces barres de toit 14 sont maintenues par leurs extrémités sur le toit 12 grâce à des dispositifs de fixation 16.

La Figure 3 illustre une section droite de la barre de toit 14 représentée sur la Figure 1 et conforme à l'invention, dans une position de repos, dite ouverte.

La barre de toit 14 présente une tige centrale 18 entourée d'une enveloppe 20 qui présente une partie amont 19 et une partie aval 21, et formée de deux demi-coques, une demi-coque supérieure 22 et une demi-coque inférieure 24. La demi-coque inférieure 24 présente un bord longitudinal amont 26 et un bord longitudinal aval 28 et elle est maintenue en position fixe par rapport à la tige centrale 18 par des premiers moyens de liaison non représentés en entourant partiellement à distance la partie inférieure de la tige centrale 18. Ainsi, un premier chemin de passage représenté par une première flèche en traits interrompus F, est ménagé entre la demi-coque inférieure 24 et la tige centrale 18, et la demi-coque inférieure 24 est ajustée de façon que la section du chemin de passage soit plus grande vers le bord longitudinal amont 26 que vers le bord longitudinal aval.

La demi-coque supérieure 22 qui présente également un bord longitudinal amont 30 et un bord longitudinal aval 32, est quant à elle montée mobile en translation verticale sur la tige centrale 18 grâce à des seconds moyens de liaison non représentés. Telle qu'illustrée sur la Figure 3, la demi-coque supérieure 22 est maintenue écartée de la tige centrale 18 grâce à des moyens élastiquement déformables 34 constitués de ressorts et en entourant partiellement la partie supérieure de la tige centrale 18 en complément le la demi-coque inférieure 24, de manière à ce que son bord longitudinal amont 30 soit écarté du bord longitudinal amont 26 de la demi-coque inférieure 24 et à former un second chemin de passage représenté par une seconde flèche T en traits interrompus dont la section moyenne est supérieure à la section moyenne du premier.

Ainsi que l'illustre la Figure 3, l'air s'écoule autour des parois des deux demi-coques 22, 24 à l'extérieur et s'engouffre également entre les deux bords longitudinaux amont 26, 30 de façon à s'écouler dans les chemins de passage selon les flèches F et T puis à s'échapper dans la partie aval 21 entre les bords longitudinaux aval 28, 32.

De la sotie, grâce aux chemins de passage qui se rétrécissent de la partie amont vers la partie aval, la Vitesse de l'air s'accroît entre les demi-coques et s'échappent à grande vitesse de la partie aval, ce qui réduit plus encore le risque d'apparition des turbulences. En outre, grâce à la différence de section des chemins de passage entre les demi-coques 22, 24 et la tige centrale 18, les deux flux d'air qui s'écoulent à travers les deux chemins sont décorrélés et la probabilité d'apparition de structures cohérentes dans la partie aval de la barre de toit est atténuée, ce qui diminue d'autant la génération de perturbations sonores.

Les demi-coques 22, 24 demeurent dans cette position ouverte, tant qu'elles ne reçoivent aucun objet pesant du type bagage. En revanche, ainsi que l'illustre la Figure 2, dès qu'un bagage 38 est disposé en appui sur la demi-coque supérieure 22 de la barre de toit 14, les moyens élastiquement déformables 34 sont comprimés. Le bord longitudinal amont 30 de la demi-coque supérieure 22 Vient en appui contre le bord longitudinal amont 26 de la demi-coque inférieure 24 de façon à interdire le passage de l'air entre les deux demi-coques 22, 24.

Ainsi, lorsque le véhicule automobile 10 est en mode d'avancement, l'air s'écoule autour du bagage et sous la demi-coque inférieure 24, entre le toit 12 du véhicule et la barre de toit 14. En revanche, dès que le bagage 38 est retiré, la demi-coque supérieure 22 retrouve sa position initiale écartée de la tige centrale 18.

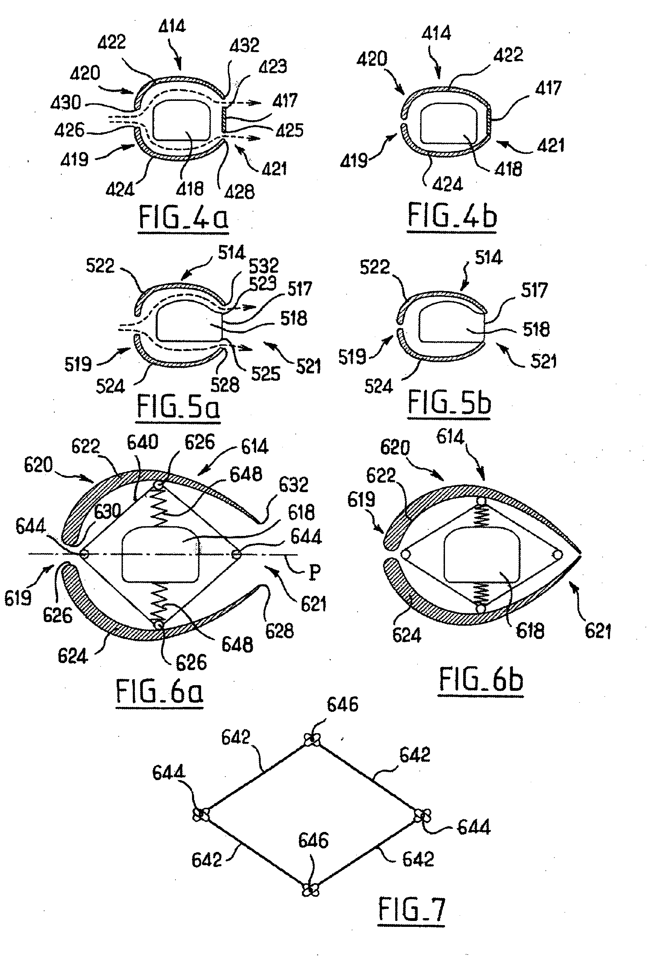

Les Figures 6a et 6b illustrent une barre de toit selon une autre variante de réalisation de l'invention dont certains éléments caractéristiques présentent une forme similaire à ceux de la barre de toit 14 illustrés sur les Figures 2 et 3 et remplissent des fonctions fondamentalement identiques. En conséquence, dans le but de simplifier les références aux dessins, ces éléments caractéristiques seront affectés du numéro de référence constitué par le numéro de la Figure 4 à laquelle on se réfère suivi du numéro de l'élément illustré sur les Figures 2 et 3 et qui est similaire. On procédera de la même façon pour les Figures 4 et 5.

Ainsi, on retrouve sur les Figures 6a et 6b la barre de toit 614 dont les demi-coques 622, 624 sont respectivement en position ouverte et en position fermée. En revanche, la demi-coque inférieure 624 est selon cette variante, montée sur la tige centrale 618, mobile en translation verticale et dépendante de la demi-coque supérieure 622, grâce à des moyens formant parallélogramme déformable 640 permettant d'entraîner la demi-coque inférieure, 624 vers la tige centrale 618 lorsque la demi-coque supérieure 622 est, elle-même, entraînée vers la tige centrale 618 par un élément pesant.

Les moyens formant parallélogramme déformable 640 comportent au moins deux éléments tels qu'illustrés sur la Figure 7, montés avantageusement à chacune des extrémités de la barre de toit.

L'élément représenté sur la Figure 7 comporte quatre tiges rigides 642 dont les extrémités sont respectivement renées entre elles et montées à pivotement pour former un parallélogramme déformable. Ainsi, ledit élément présente quatre axes parallèles formant pivots, deux premiers axes diagonalement opposés 644 et deux seconds axes 646 diagonalement opposés.

La Figure 6a est une vue en section droite de la barre de toit 614 au niveau d'un élément des moyens formant parallélogramme déformable 640, qui entoure complètement la tige centrale 618, Les moyens formant parallélogramme déformable 640 sont reliés à la tige centrale 618 de façon que les deux premiers axes diagonalement opposés 644 soient orientés sensiblement parallèlement à la tige centrale 618 et soient montés glissants dans un plan sensiblement horizontal P coupant ladite tige centrale 618, grâce à des moyens de liaison non représentés. En outre, les deux seconds axes diagonalement opposés 646 sont respectivement solidaires des deux demi-coques 622, 624 et sont respectivement maintenus écartés de la tige centrale 618, dans ladite position ouverte, par des seconds moyens élastiquement déformables 648 symétriques l'un de l'autre par rapport à la tige centrale 618.

La barre de toit 614 lustrée en section sur la Figure 6a, comporte au moins deux éléments représentés sur la Figure 7, éloignés l'un de l'autre pour maintenir les deux demi-coques 622, 624 parallèlement à la tige centrale 618, leurs bords longitudinaux amont 626, 630 et rival 628, 632 respectivement espacés en regard les uns des autres pour permettre le passage de l'air.

Dès qu'un élément pesant est monté en appui sur la demi-coque supérieure 622, les seconds moyens élastiquement déformables 648 sont contraints, l'entraînement de la demi-coque supérieure 622 vers la tige centrale 618 provoquant l'éloignement des deux premiers axes 644 et en conséquence le rapprochement des deux seconds axes 646 par rapport à la tige centrale 618. Ainsi, les deux demi-coques 622, 624 se rapprochent l'une de l'autre et de la tige centrale 618 pour aboutir dans ladite position fermée, illustrée sur la Figure 6b, dans laquelle les bords longitudinaux amont 630, 626 et les bords longitudinaux aval, 628, 632 sont en appui les uns contre les autres.

De la sorte, dans ladite position fermée, non seulement la partie amont 619 de l'enveloppe 620 est étanche à l'air, mais aussi la partie aval 621, ce qui diminue plus encore la fréquence d'apparition de turbulences, l'air s'écoulant autour de la barre de toit 614, sans pénétrer à l'intérieur de l'enveloppe 620.

Les Figures 4 et 5 illustrent selon encore deux autres variantes de réalisation de l'invention, une barre de toit dont la partie aval est également étanche dans ladite position fermée. Selon ces variantes, les deux demi-coques sont également mobiles en translation verticale par rapport à la tige centrale, par exempte, grâce à des moyens formant parallélogramme déformable tels que décrit ci-dessus,

La barre de toit 414 représentée sur la Figure 4 comporte une tige centrale 418 présentant une première portion aval constituée d'une plaque longitudinale 417 qui correspond à la partie aval 421 de l'enveloppe 4.20 ou la partie aval de la barre de toit 414. La plaque longitudinale 417 est montée verticalement de façon à présenter un bord saillant supérieur 423 et un bord saillant inférieur 425 contre lesquels les bords longitudinaux aval 432, 428 des deux demi-coques 422, 424 sont respectivement adaptés à venir s'appliquer dans ladite position fermée que représente la Figure 4b.

En variante non représentée, l'une desdites deux demi-coques (424) est montée longitudinalement à pivotement sur ladite tige centrale (418), de façon que l'appui du bord amont (430) de l'autre demi-coque (422) sur son bord amont (426) entraîne son bord aval (428) vers le bord aval (432) de l'autre demi-coque (422).

En revanche, dans ladite position ouverte qu'illustre la Figure 4a, l'air est susceptible de s'écouler autour de l'enveloppe 420 et entre les deux demi-coques 422, 424 qui la constituent tout comme pour la barre de toit illustrée sur la Figure 3.

De la même façon, la barre de toit 514 représentée sur les Figures 5a et 5b, comporte une tige centrale 518 présentant une seconde portion aval 517 qui s'étend de la partie amont 519 vers la partie aval 521 et correspond à la partie aval 521 de l'enveloppe 520. Cette seconde portion aval 517 présente une arête supérieure 523 et une arête inférieure 525 contre lesquels les bords longitudinaux aval 532, 528 des deux demi-coques 522, 524 sont respectivement adaptés à venir s'appliquer dans ladite position fermée que représente la Figure 5b. Cette disposition de la partie avale permet de simplifier la forme de la coque.

## Revendications

1. Barre de toit (14) pour véhicule automobile (10) adaptée à supporter un bagage (38) et à être montée en travers par rapport à la direction d'avancement dudit véhicule automobile (10), ladite barre de toit (14) comportant une tige centrale (18) recouverte d'une enveloppe (20), l'air étant susceptible de s'écouler autour et à travers ladite enveloppe (20), à partir de la partie amont (19) de ladite barre de toit (14) dans une direction opposée à ladite direction d'avancement,
**caractérisée en ce que** ladite enveloppe (20) comprend deux demi-coques longitudinales (22, 24) montées de part et d'autre de ladite tige centrale (18) et qui présentent chacune un bord longitudinal amont (26, 30) correspondant à ladite partie amont (19), lesdites demi-coques longitudinales (22, 24) étant mobiles en translation l'une par rapport à l'autre, entre une position fermée dans laquelle les deux bords amont (26, 30) sont joints et une position ouverte dans laquelle les deux bords amont (26, 30) sont écartés l'un de l'autre pour permettre le passage de l'air entre les deux ;
et **en ce que** les deux demi-coques longitudinales (22, 24) sont adaptées à être maintenues dans ladite position fermée lorsque ladite barre de toit (14) reçoit ledit bagage (38) et à être maintenues dans ladite position ouverte lorsque ladite barre de toit (14) est libre.

2. Barre de toit selon la revendication 1, **caractérisée en ce qu'**elle comprend des moyens élastiquement déformables (34) adaptés à maintenir lesdites deux demi-coques longitudinales (22, 24) dans ladite position ouverte.

3. Barre de toit selon la revendication 1 ou 2, **caractérisée en ce qu'**elle présente une partie aval (21) opposée à ladite partie amont (19), lesdites deux demi-coques longitudinales (22, 24) présentant des bords longitudinaux aval (28, 32) correspondant à ladite partie aval (21), et **en ce que** lesdits bords longitudinaux aval (28, 32) sont maintenus écartés l'un de l'autre dans ladite position ouverte pour former des chemins de passage de l'air entre lesdites deux demi-coques longitudinales (22, 24), de la partie amont (19) vers la partie aval (21).

4. Barre de toit selon la revendication 3, **caractérisée en ce que**, dans ladite position ouverte, lesdits chemins de passage se rétrécissent de la partie amont (19) vers la partie aval (21).

5. Barre de toit selon la revendication 3 ou 4, **caractérisée en ce que** ladite tige centrale (18), entre les deux demi-coques (22, 24), définie des chemins de passages de sections différentes de façon à décorréler les flux d'air qui les traversent.

6. Barre de toit selon l'une quelconque des revendications 3 à 5, **caractérisée en ce que** lesdits bords longitudinaux aval (28, 32) sont susceptibles d'être joints dans ladite position fermée.

7. Barre de toit selon l'une quelconque des revendications 3 à 5, **caractérisée en ce que** ladite tige centrale (18) présente une portion aval (417, 517) correspondant à ladite partie aval (421, 521) de ladite barre de toit (14), lesdits bords longitudinaux aval (28, 32) étant susceptibles de prendre appui contre ladite portion aval (417, 517) dans ladite position fermée.

8. Barre de toit selon l'une quelconque des revendications 1 à 7, **caractérisée en ce que** lesdites deux demi-coques longitudinales (622, 624) sont montées mobiles sur ladite tige centrale (618).

9. Barre de toit selon la revendication 8, **caractérisée en ce que** lesdites deux demi-coques longitudinales (622, 624) sont reliées à ladite tige centrale (618) par des moyens formant parallélogramme déformable (640) qui présentent quatre axes parallèles (644, 646) formant pivots, ladite tige centrale (618) étant étendue à l'intérieur desdits moyens (640) dont deux premiers axes diagonalement opposés (644) sensiblement parallèles à ladite tige centrale (618) sont montés glissants dans un plan (P) sensiblement horizontal coupant ladite tige centrale (618) et dont deux seconds axes diagonalement opposés (646) sont solidaires respectivement des deux demi-coques (622, 624) ;
et **en ce que** l'entraînement d'une demi-coque (622) par rapport à ladite tige centrale (618) provoque la déformation desdits moyens (640) et le déplacement de l'autre demi-coque (624) dans une direction opposée.

10. Barre de toit selon la revendication 8, **caractérisée en ce que** l'une desdites deux demi-coques (424) est montée longitudinalement à pivotement sur ladite tige centrale (418), de façon que l'appui du bord amont (430) de l'autre demi-coque (422) sur son bord amont (426) entraîne son bord aval (428) vers le bord aval (432) de l'autre demi-coque (422).

## Claims

1. Roof rack bar (14) for a motor vehicle (10) designed to support luggage (38) and to be mounted crosswise with respect to the direction of travel of the said motor vehicle (10), the said roof rack bar (14) comprising a central rod (18) covered with a shroud (20), the air being able to flow around and through the said shroud (20) from the upstream part (19) of the said roof rack bar (14) in the opposite direction to the said direction of travel,
**characterized in that** the said shroud (20) comprises two longitudinal half shells (22, 24) mounted one on each side of the said central rod (18) and which each have an upstream longitudinal edge (26, 30) corresponding to the said upstream part (19), the said longitudinal half shells (22, 24) being translationally mobile relative to one another between a closed position in which the two upstream edges (26, 30) are contiguous and an open position in which the upstream edges (26, 30) are separated from one another to allow air to pass between them;
and **in that** the two longitudinal half shells (22, 24) are designed to be kept in the said closed position when the said roof rack bar (14) is loaded with the said luggage (38) and kept in the said open position when the said roof rack bar (14) is unladen.

2. Roof rack bar according to Claim 1, **characterized in that** it comprises elastically deformable means (34) designed to keep the said two longitudinal half shells (22, 24) in the said open position.

3. Roof rack bar according to Claim 1 or 2, **characterized in that** it has a downstream part (21) opposite the upstream part (19), the said two longitudinal half shells (22, 24) having downstream longitudinal edges (28, 32) corresponding to the said downstream part (21), and **in that** the said downstream longitudinal edges (28, 32) are kept separated from one another in the said open position in order to form passageways for the air between the said two longitudinal half shells (22, 24) from the upstream part (19) to the downstream part (21).

4. Roof rack bar according to Claim 3, **characterized in that**, in the said open position, the said passageways narrow from the upstream part (19) to the downstream part (21).

5. Roof rack bar according to Claim 3 or 4, **characterized in that** the said central rod (18) between the two half shells (22, 24) defines passageways of different cross sections so as to offset the air streams passing through them.

6. Roof rack bar according to any one of Claims 3 to 5, **characterized in that** the said downstream longitudinal edges (28, 32) are able to be contiguous in the said closed position.

7. Roof rack bar according to any one of Claims 3 to 5, **characterized in that** the said central rod (18) has a downstream portion (417, 517) corresponding to the said downstream part (421, 521) of the said roof rack bar (14), the said downstream longitudinal edges (28, 32) being able to bear against the said downstream portion (417, 517) in the said closed position.

8. Roof rack bar according to any one of Claims 1 to 7, **characterized in that** the said two longitudinal half shells (622, 624) are mounted such that they can move on the said central rod (618).

9. Roof rack bar according to Claim 8, **characterized in that** the said two longitudinal half shells (622, 624) are connected to the said central rod (618) by means forming a deformable parallelogram (640) which means have four parallel pivot-forming pins (644, 646), the said central rod (618) extending inside the said means (640) of which two diagonally opposed first pins (644) substantially parallel to the said central rod (618) are mounted such that they can slide in a substantially horizontal plane (P) that intersects the said central rod (618) and of which two second diagonally opposed pins (646) are secured to the two half shells (622, 624) respectively; and **in that** movement of one half shell (622) with respect to the said central rod (618) causes the said means (640) to deform and thus causes the other half shell (624) to move in an opposite direction.

10. Roof rack bar according to Claim 8, **characterized in that** one of the said two half shells (424) is mounted longitudinally with pivoting on the said central rod (418) so that if the upstream edge (430) of the other half shell (422) bears against its upstream edge (426), this causes its downstream edge (428) to move towards the downstream edge (432) of the other half shell (422).

## Patentansprüche

1. Dachträger (14) für Kraftfahrzeug (10), der ein Gepäckstück (38) tragen und quer zu der Fahrtrichtung des Kraftfahrzeugs (10) montiert werden kann, wobei der Dachträger (14) einen zentralen Schaft (18) aufweist, der mit einem Mantel (20) überzogen ist, wobei die Luft ausgehend von dem stromaufwärtigen Teil (19) des Dachträgers (14) in eine Richtung entgegengesetzt zu der Fahrtrichtung um und durch den Mantel (20) fließen kann,
**dadurch gekennzeichnet, dass** der Mantel (20) zwei Längshalbschalen (22, 24) aufweist, die zu beiden Seiten des zentralen Schafts (18) installiert sind und jeweils einen stromaufwärtigen Längsrand (26, 30) aufweisen, der dem stromaufwärtigen Teil (19) entspricht, wobei die Längshalbschalen (22, 24) in Verschiebung zueinander zwischen einer geschlossenen Position, in der die zwei stromaufwärtigen Ränder (26, 30) zusammengefügt sind, und einer offenen Position, in der die zwei stromaufwärtigen Ränder (26, 30) auseinander gespreizt sind, um das Durchgehen der Luft zwischen ihnen zu erlauben, beweglich sind;
und dass die zwei Längshalbschalen (22, 24) in der geschlossenen Position gehalten werden können, wenn der Dachträger (14) das Gepäckstück (38) aufnimmt, und in der offenen Position gehalten werden können, wenn der Dachträger (14) frei ist.

2. Dachträger nach Anspruch 1, **dadurch gekennzeichnet, dass** er elastisch verformbare Mittel (34) aufweist, die die zwei Längshalbschalen (22, 24) in der offenen Position halten können.

3. Dachträger nach Anspruch 1 oder 2, **dadurch gekennzeichnet, dass** er einen stromabwärtigen Teil (21) aufweist, der dem stromaufwärtigen Teil (19) entgegengesetzt ist, wobei die zwei Längshalbschalen (22, 24) stromabwärtige Längsränder (28, 32) aufweisen, die dem stromabwärtigen Teil (21) entsprechen, und dass die stromabwärtigen Längsränder (28, 32) voneinander in der offenen Position gespreizt gehalten werden, um Luftdurchgangswege zwischen den zwei Längshalbschalen (22, 24) von dem stromaufwärtigen (19) zu dem stromabwärtigen Teil (21) zu bilden.

4. Dachträger nach Anspruch 3, **dadurch gekennzeichnet, dass** sich die Durchgangswege in der offenen Position von dem stromaufwärtigen Teil (19) zu dem stromabwärtigen Teil (21) verjüngen.

5. Dachträger nach Anspruch 3 oder 4, **dadurch gekennzeichnet, dass** der zentrale Schaft (18) zwischen den zwei Längshalbschalen (22, 24) Durchgangswege mit unterschiedlichen Querschnitten definiert, so dass die Luftströme, die sie durchqueren, dekorreliert werden.

6. Dachträger nach einem der Ansprüche 3 bis 5, **dadurch gekennzeichnet, dass** die beiden stromabwärtigen Längsränder (28, 32) in der geschlossenen Position zusammengefügt werden können.

7. Dachträger nach einem der Ansprüche 3 bis 5, **dadurch gekennzeichnet, dass** der zentrale Schaft (18) einen stromabwärtigen Abschnitt (417, 517) aufweist, der dem stromabwärtigen Teil (421, 521) des Dachträgers (14) entspricht, wobei die stromabwärtigen Längsränder (28, 32) gegen den stromabwärtigen Abschnitt (417, 415) in der geschlossenen Position anliegen können.

8. Dachträger nach einem der Ansprüche 1 bis 7, **dadurch gekennzeichnet, dass** die zwei Längshalbschalen (622, 624) auf den zentralen Schaft (618) beweglich montiert sind.

9. Dachträger nach Anspruch 8, **dadurch gekennzeichnet, dass** die zwei Längshalbschalen (622, 624) mit dem zentralen Schaft (618) durch Mittel verbunden sind, die ein verformbares Parallelogramm (640) bilden, die vier parallele Achsen (644, 646) aufweisen, die Zapfen bilden, wobei sich der zentrale Schaft (618) im Inneren der Mittel (640) erstreckt, von welchen zwei erste diagonal entgegengesetzte Achsen (644), die zum zentralen Schaft (618) im Wesentlichen parallel sind, gleitend in einer im Wesentlichen horizontalen Ebene (P), die den zentralen Schaft (618) schneidet, installiert sind, und von welchen zwei zweite diagonal entgegengesetzte Achsen (646) jeweils fest mit den zwei Längshalbschalen (622, 624) verbunden sind,
und dass das Antreiben einer Längshalbschale (622) zu dem zentralen Schaft (618) das Verformen der Mittel (640) und das Verschieben der anderen Längshalbschale (624) in eine entgegengesetzte Richtung bewirkt.

10. Dachträger nach Anspruch 8, **dadurch gekennzeichnet, dass** eine der zwei Längshalbschalen (424) längs schwenkend auf dem zentralen Schaft (418) derart montiert ist, dass das Aufliegen des stromaufwärtigen Rands (430) der anderen Längshalbschale (422) auf ihrem stromaufwärtigen Rand (426) ihren stromabwärtigen Rand (428) zu dem stromabwärtigen Rand (432) der anderen Längshalbschale (422) antreibt.
